# EUROPEAN PATENT SPECIFICATION

(11) **EP 2 465 299 B1**
(45) Date of publication and mention of the grant of the patent: **19.06.2019**
(21) Application number: 10707847.9
(22) Date of filing: 08.02.2010
(51) Int. Cl.: H04W 48/16

(54) **BACKGROUND SCAN FOR IDENTIFYING RADIO ACCESS POSSIBILITIES, MOBILE TERMINAL AND COMPUTER PROGRAM**
HINTERGRUNDSUCHE ZUM IDENTIFIZIEREN MÖGLICHER FUNKZUGANGSMÖGLICHKEITEN, MOBILES ENDGERÄT UND COMPUTERPROGRAMM
BALAYAGE EN ARRIÈRE PLAN POUR IDENTIFIER DES POSSIBILITÉS D'ACCÈS RADIO, TERMINAL MOBILE ET LOGICIEL

(30) Priority: 13.08.2009 US 540644
(43) Date of publication of application: 20.06.2012
(73) Proprietor: Sony Ericsson Mobile Communications AB, 221 88 Lund (SE)
(72) Inventor: KLASSON, Kjell Bo Anders, S-Hastveda 280 23 (SE)
(74) Representative: Banzer, Hans-Jörg
(86) International application number: PCT/EP2010/051472
(87) International publication number: WO 2011/018247

(56) References cited:
- WO-A2-98/27766
- US-A1- 2002 197 992
- US-A1- 2009 022 068

## Description

### [Technical Field]

The present invention relates to a method carried out by a mobile terminal capable of carrying out wireless communications using at least two different radio access possibilities, such as at least two radio access technologies (RAT). The invention also relates to a mobile terminal configured to carry out such a method, and to a computer program comprising instructions configured, when executed on a mobile terminal,
to cause the mobile terminal to carry out such a method.

### [Background]

Multimode mobile terminals, such as some mobile phones, user equipments (UEs), personal digital assistants (PDAs), or mobile computers, are known in the art. Multimode mobile terminals are mobile terminals supporting at least two different radio access technologies (RAT) or at least two frequency bands of one RAT. Examples of RATs that may be supported by a mobile terminal are the Global System for Mobile Communications (GSM), the Universal Mobile Telecommunication System (UMTS), Bluetooth, etc.

For instance, PCT application WO 2008/116120 A2 relates to a user equipment (UE) able to communicate with wireless communication systems of different RATs. The UE may camp on a serving cell for a first RAT (e.g. GSM) and may periodically perform searches for a second RAT (e.g. WCDMA) to find a better cell.

PCT application WO 90/13211 relates to methodologies that allow a communication unit to access more than one type of communication system. A bulletin board resource is provided to transmit a menu of available radio frequency (RF) services in a particular geographic area from time to time. The communication unit monitors the bulletin board resource and obtains this information.

European patent application EP 1 545 144 A1 relates to a mobile terminal in multi-mode mobile communication systems. Broadcasting system configuration information on defined system configuration channels is disclosed. The mobile terminal can thereafter configure itself based on its built-in capabilities and the broadcast information. A system configuration information channel (SCICH) is used to do so.

US 2009/0022068 A1 discloses a method according to the preamble of claim 1. WO 98/27766 A2 discloses various background scanning techniques in the field of wireless communications. In addition, US 2002/0197992 A1 proposes to perform background scans for a mobile terminal to select the most adequate cell for the mobile terminal to camp on.

It is desirable to provide methods to notably save more battery power and allow more efficient use of available radio access possibilities.

### [Summary]

In order to meet the above-mentioned aims, the present invention provides a method as defined in claim 1, a mobile terminal as defined in claim 10, and a computer program product as defined in claim 11. Advantageous embodiments are defined in the dependent claims.

In one embodiment, a method is carried out by a mobile terminal and includes the following steps. The mobile terminal is served by a serving network. The mobile terminal performs a background scan to identify radio access possibilities other than the serving network in the area where the mobile terminal is located, and then stores information, herein referred to as background-scan-based or BSB information, about the identified radio access possibilities. The mobile terminal determines that a new serving network is needed and thereafter attempts to connect to a new serving network using the BSB information.

This reduces the searching efforts when a new serving network is needed. When the mobile terminal determines, for whatever reasons, that a new serving network is needed, the mobile terminal does not first perform a complete scan to identify all radio access possibilities available in the area where the mobile terminal is located. Rather, a set of candidate radio access possibilities (which are likely to be available in the area where the mobile terminal is located) is used by the mobile terminal in an attempt to connect to a new serving network. More specifically, the BSB information that has been previously obtained by performing a background scan to identify radio access possibilities is used by the mobile terminal.

This also allows a faster connection to a new serving network when one is needed. A new serving network may for instance be needed when a mobile terminal goes out of coverage of its serving network. In that case, the above-described embodiment is especially useful for speeding up out-of-coverage search procedures.

In the event of a loss of coverage, the benefit may be a few seconds or more. This may be decisive if an emergency call is to be made. The above-described embodiment of the invention does not require adding new network nodes to existing network architectures. It neither requires additional signalling channels nor modification of existing channels.

In the present context, "being served by a serving network" means communicating with a serving network or being registered with a serving network to be able to communicate therewith.

"Performing a background scan" means searching, while being served by a serving network using a given radio access possibility, for other radio access possibilities. Namely, in the foreground, the mobile terminal communicates (in a so-called active mode) or is able to communicate (in a so-called idle mode) with the serving network and, in the background, it uses some of its resources to identify other radio access possibilities that could be used in the event that, for instance, coverage of the currently serving network would be lost.

According to the invention, the radio access possibilities include at least one RAT other than the RAT of the serving network and, for each RAT, at least one frequency band associated therewith.

In the present context, a radio access technology (RAT) is a set of communication mechanisms, means and/or protocols to provide wireless communications from a mobile terminal to a base station. Examples of RATs include GSM, GPRS, UMTS, Bluetooth, WLAN, LTE, etc. A frequency band includes a range of frequencies, i.e. one or more frequency channels, assigned to a particular RAT. One or more frequency bands may be provided for one RAT. The meaning of a frequency band in the present context is further illustrated with examples in PCT application WO 2008/116120 A2, page 5₁ paragraph [0022] and Table 1. The meaning of a frequency band in the present context is however not limited by the examples mentioned in WO 2008/116120, which is only mentioned herein by way of illustration for a skilled person. In the present context, frequency channels associated with different cells within one frequency band of a cellular communication system are not themselves considered frequency bands.

In one embodiment, the step of determining (i.e. the step of determining that a new serving network is needed) includes a sub-step of determining that coverage of the serving network by which the mobile terminal was served is lost.

In this embodiment, when the mobile terminal goes out of coverage of its serving network, i.e. loses coverage because nothing or substantially nothing can be decoded from its serving network, the BSB information is used by the mobile terminal to attempt to connect to a new serving network. By using the BSB information, a new connection is generally obtained in a faster manner than without using the BSB information. This is because, generally, the location of the mobile terminal does not change, or changes only by a small distance, between the time when the last background scan was performed and the time when the mobile terminal goes out of coverage. Generally, the speed of connection to a new serving network is improved and, accordingly, the power resources required to find an available new serving network are smaller than without using the BSB information.

In one embodiment, the step of determining (i.e. the step of determining that a new serving network is needed) includes a sub-step of determining that the serving network by which the mobile terminal is served provides limited services.

In one embodiment, the step of determining (i.e. the step of determining that a new serving network is needed) includes a sub-step of determining that the serving network by which the mobile terminal is served is not the mobile terminal's preferred serving network.

In one embodiment, the step of determining (i.e. the step of determining that a new serving network is needed) includes a step of determining that the serving network by which the mobile terminal is served is not one of the preferred serving networks amongst a list of preferred serving networks stored in the mobile terminal.

In one embodiment, the step of determining (i.e. the step of determining that a new serving network is needed) includes a sub-step of determining that a timer has expired and that the serving network by which the mobile terminal is served is not the mobile terminal's preferred serving network.

In one embodiment, the step of determining (i.e. the step of determining that a new serving network is needed) includes a sub-step of determining that a timer has expired and that the serving network by which the mobile terminal is served is not one of the preferred serving networks amongst a list of preferred serving networks stored in the mobile terminal.

In one embodiment, the method further includes, after the step of storing (i.e. the step of storing the BSB information) and before the step of determining (i.e. the step of determining that a new serving network is needed), steps of being powered off, and being thereafter powered on; wherein the step of determining (i.e. the step of determining that a new serving network is needed) includes a sub-step of determining that the mobile terminal has been powered on.

In this embodiment, when the mobile terminal is powered on, the mobile terminal attempts to connect to a new serving network using the BSB information. In general, this improves the speed of connection to a new serving network, thus reducing the power resources required to connect to a new serving network. This is because the last background scan is likely to have been made by the mobile terminal in an area which is substantially the same as the area where the mobile terminal is located when being powered on.

In one embodiment, the method further includes, after the step of attempting (i.e. the step of attempting to connect to a new serving network using the BSB information), steps of determining that the step of attempting has not been successful; performing a scan to identify radio access possibilities in an area where the mobile terminal is located; and attempting to connect to a new serving network using a radio access possibility identified by the scan.

In this embodiment, if the attempt to connect to a new serving network using the BSB information fails, a full scan of the available radio access possibilities in the area where the mobile terminal is located is performed. This so-called full scan is not a background scan in the sense that, when the full scan is carried out, the mobile terminal has no assigned serving network through which communication can be made. In other words, if the use of the BSB information has not been helpful because the mobile terminal has for instance moved by a significant distance and the BSB information is therefore outdated, the mobile terminal reverts to a full scan. The full scan may also be called "foreground scan" to better distinguish it from a background scan.

In one embodiment, before performing a full scan to identify all available radio access possibilities in the area where the mobile terminal is located, the attempt to connect to a new serving network using the BSB information is repeated a number of times, such as a predetermined number of times. In one embodiment, the number of repetitions, i.e. the above-mentioned number of times, is comprised between two and ten.

In one embodiment, the method further includes steps of receiving, from the serving network, information, herein referred to as serving-network-based or SNB information, about radio access possibilities in an area where the mobile terminal is located; and storing the SNB information.

In one embodiment, the method further includes, after the step of determining that a new serving network is needed and before the step of attempting to connect to a new serving network using the BSB information, steps of attempting to connect to a new serving network using the SNB information, and determining that the step of attempting to connect to a new serving network using the SNB information is not successful.

In this embodiment, the mobile terminal uses the BSB information to attempt to connect to a new serving network only when the use of explicit information about available radio access possibilities obtained or received from the serving network has not been successful to connect to a new serving network.

In one embodiment, the method further includes, after the step of attempting to connect to a new serving network using the SNB information, after the step of determining that the step of attempting to connect to a new serving network using the SNB information is not successful, and after the step of attempting to connect to a new serving network using the BSB information, steps of determining that the step of attempting to connect to a new serving network using the BSB information is not successful, performing the scan to identify the radio access possibilities in the area where the mobile terminal is located, and attempting to connect to a new serving network using a radio access possibility identified by the scan.

Thus, in this embodiment, if neither the SNB information nor the BSB information was helpful to connect to a new serving network, the mobile terminal reverts to performing a full scan, i.e. a full foreground scan.

The invention also relates to a mobile terminal configured to carry out a method according to any one of the above-described embodiments.

The invention further relates to a computer program comprising instructions configured, when executed on a mobile terminal, to cause the mobile terminal to carry out a method according to any one of the above-described embodiments.

### [Brief description of the drawings]

Embodiments of the present invention shall now be described, in conjunction with the appended figures, in which:
Fig. 1 schematically illustrates an exemplary network configuration in one embodiment of the invention;
Fig. 2 is a flowchart of a method in one embodiment of the invention;
Fig. 3 is a flowchart of a method in one embodiment of the invention, wherein the step of determining includes a sub-step of determining that coverage of the serving network has been lost;
Fig. 4 is a flowchart of a method in one embodiment of the invention, wherein the step of determining includes a sub-step of determining that the serving network provides limited services;
Fig. 5 is a flowchart of a method in one embodiment of the invention, wherein the mobile terminal determines that the current serving network is not a preferred network;
Fig. 6 is a flowchart of a method in one embodiment of the invention, wherein the step of determining includes determining that the mobile terminal has been powered on;
Fig. 7 is a flowchart of a method in one embodiment of the invention, wherein, when a connection attempt using BSB information is not successful, the mobile terminal reverts to performing a full scan (also called "area scan");
Fig. 8 is a flowchart of a method in one embodiment of the invention, wherein, if necessary, more than one attempt to connect to a new serving network using the BSB information are carried out;
Fig. 9 is a flowchart of a method in one embodiment of the invention, wherein the mobile terminal receives SNB information and uses it for attempting to connect to a new serving network;
Fig. 10 is a flowchart of a method in one embodiment of the invention, wherein an attempt to connect to a new serving network using SNB information is performed, then, if not successful, an attempt to connect to a new serving network using BSB information is performed, and, then, if not successful, a full scan (also called "area scan") is performed; and
Fig. 11 schematically illustrates components of a mobile terminal in one embodiment of the invention.

### [Description of some embodiments]

The present invention shall now be described in conjunction with specific embodiments. It may be noted that these specific embodiments serve to provide the skilled person with a better understanding, but are not intended to in any way restrict the scope of the invention, which is defined by the appended claims.

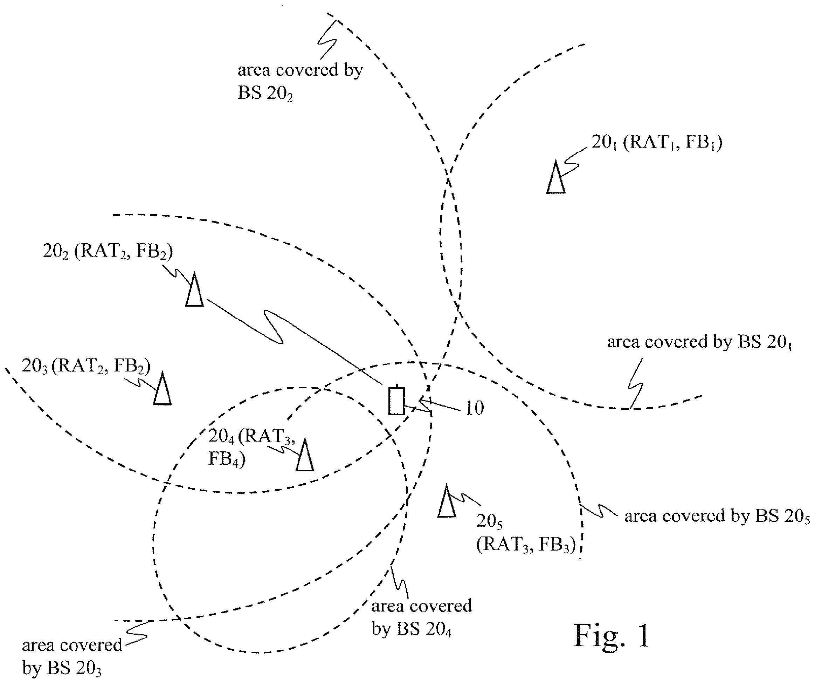

Fig. 1 schematically illustrates a network configuration in one embodiment of the invention. A mobile terminal 10 is in a region wherein three radio access technologies RAT₁, RAT₂, RAT₃ are provided. The mobile terminal 10 is configured to be able to communicate using mechanisms, means and/or protocols associated with each one of these three radio access technologies RAT₁, RAT₂, RAT₃. Mobile terminal 10 may also be configured to be able to communicate using mechanisms, means and/or protocols associated with other radio access technologies RATᵢ which are not available in the region wherein mobile terminal 10 is located.

Specifically, five base stations (BS) 20₁, 20₂, 20₃, 20₄, 20₅ are illustrated in Fig. 1 in the region where mobile terminal 10 is located.

Base station 20₁ provides wireless communication using radio access technology RAT₁ and frequency band FB₁. The area covered by base station 20₁ is illustrated in Fig. 1 by a dotted curve (labelled "area covered by BS 20₁"). As illustrated, mobile terminal 10 is not covered by base station 20₁. Base station 20₂ provides wireless communication using radio access technology RAT₂ and frequency band FB₂. Mobile terminal 10 is within the coverage of base station 20₂, as illustrated. Base station 20₃ provides wireless communications also using radio access technology RAT₂ and frequency band FB₂. Mobile terminal 10 is also within the coverage of base station 20₃, as illustrated. Within frequency band FB₂, one or more frequency channels may be provided for communication with base station 20₂, and one or more other frequency channels may be provided for communications with base station 20₃. Base station 20₄ provides wireless communications using radio access technology RAT₃ and frequency band FB₄. Mobile terminal 10 is not within the coverage of base station 20₄, as illustrated. Base station 20₅ provides wireless communications using radio access technology RAT₃ and frequency band FB₃. Mobile terminal 10 is within the area covered by base station BS 20₅, as illustrated.

As illustrated in Fig. 1, mobile terminal 10 is served by the serving network associated with base station 20₂. While being served s10 by the serving network associated with base station 20₂, mobile terminal 10 is configured to perform s20 a background scan to identify radio access possibilities in the area where mobile terminal 10 is located. During this background scan, mobile terminal 10 identifies the radio access possibilities associated with communicating with base station 20₅ using radio access technology RAT₃ and frequency band FB₃. This information, called BSB information, is stored s30 in mobile terminal 10.

The possibility to communicate with base station 20₃ is not considered to constitute another radio access possibility in the present context. Handover procedures may be provided to associate at any time mobile terminal 10 with base station 20₃ rather than with base station 20₂. This is not considered to be a change in radio access technology and/or frequency band, i.e. a change in radio access possibility. Rather, this considered to be a change of frequency channel and corresponding cell.

If, at a particular point in time, mobile terminal 10 moves outside the coverage area associated with base stations 20₂ and 20₃, i.e. moves outside the coverage area of radio access possibility (RAT₂, FB₂), or if, at a particular point in time, the coverage area associated with radio access possibility (RAT₂, FB₂) changes due to changes in air interface physical transmission conditions or in network operational conditions (for instance due to a maintenance performed on one or more base stations associated with this radio access possibility or failure of one of the base stations), mobile terminal 10 determines that a new serving network is needed. This is because coverage of the serving network by which mobile terminal 10 was served until now has been lost. Then, the BSB information is used in an attempt by mobile terminal 10 to connect to a new serving network.

In the above-described exemplary network configuration, the BSB information includes information identifying the radio access possibility associated with base station 20₅. Mobile terminal 10 therefore first attempts to connect with base station 20₅. Assuming that the attempt was successful, the provision of BSB information within the memory of mobile terminal 10 has speeded up the search for new connection after an out-of-coverage event.

If mobile terminal 10 is not able to successfully connect to a new serving network using the BSB information, it may for instance either attempts again to connect to a new serving network using the BSB information or it may revert to performing a full scan of the available radio access possibilities in the area where mobile terminal 10 is located.

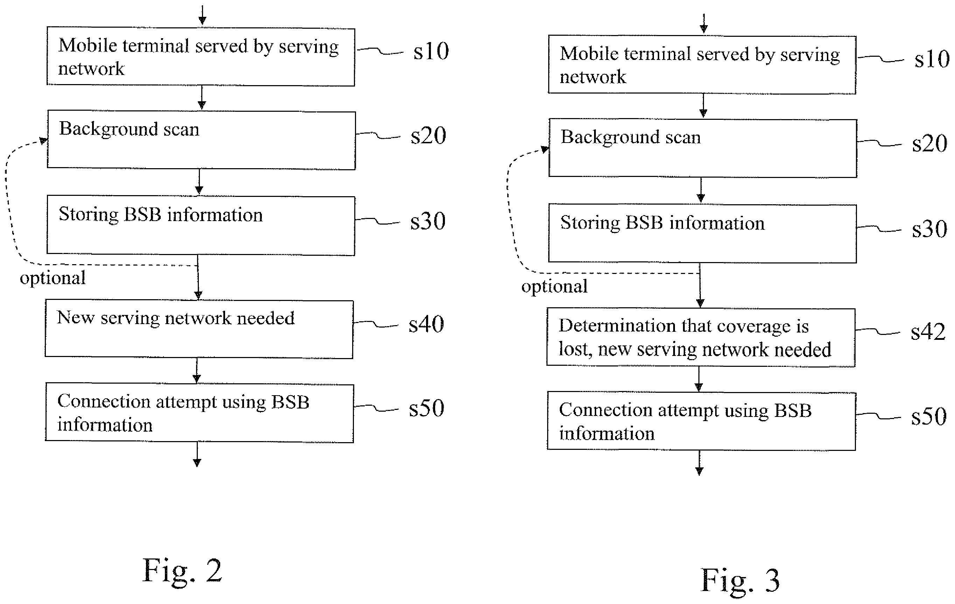

More embodiments of the invention will now be described with reference to the flowcharts of Figs. 2 - 10.

Fig. 2 is a flowchart of a method in one embodiment of the invention. In step s10, mobile terminal 10 is served by a serving network. In step 20, while being served by the serving network, mobile terminal 10 performs a background scan of other available radio access possibilities. The information gathered during the background scan is stored, in step s30, in the memory of mobile terminal 10.

Optionally, steps s20 and s30 may be periodically repeated while mobile terminal 10 is served by the serving network. This is illustrated in the flowchart of Fig. 2 by the dotted arrow labelled "optional".

If the coverage of the serving network is lost, or if, for other reasons not associated with losing the coverage of the serving network, it is determined in step s40 that a new serving network is needed, mobile terminal 10 attempts to connect to a new serving network using the BSB information in step s50.

Fig. 3 is a flowchart of a method in one embodiment of the invention, which differs from the method illustrated in Fig. 2 in that step s40 of determining that a new serving network is needed includes more specifically a step s42 of determining that coverage of the serving network by which mobile terminal 10 was served until now is lost. A new serving network is therefore needed, and, in step s50, mobile terminal 10 attempts to connect to a new serving network using the stored BSB information.

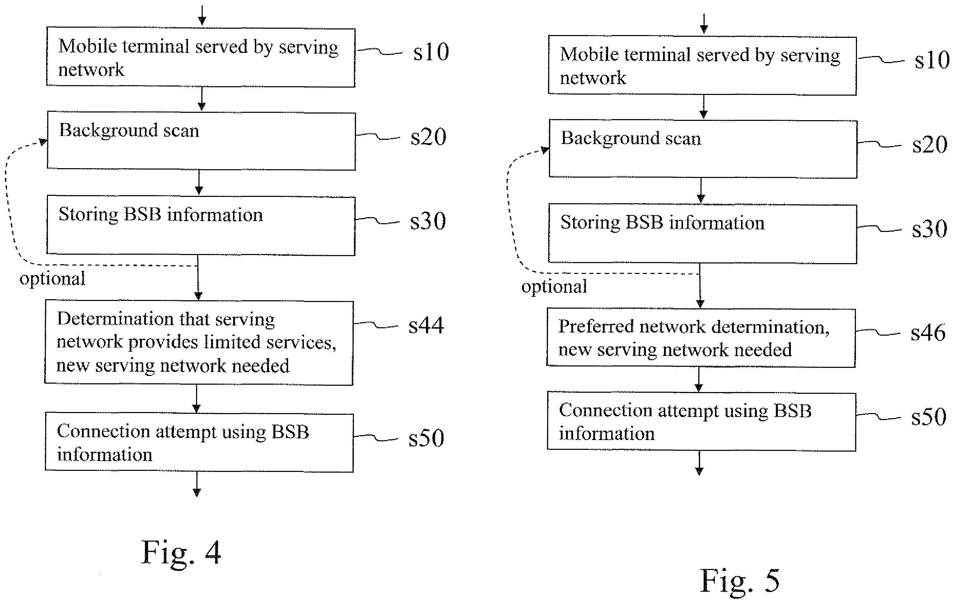

Fig. 4 is a flowchart of a method in one embodiment of the invention, which differs from the method illustrated in Fig. 2 in that the step of determining s40 that a new serving network is needed includes more specifically a step s44 of determining that the coverage of the current serving network provides limited services. This may for instance be because mobile terminal 10 camps on a serving network but is not allowed to use speech or data services due to roaming agreements between its subscription owner and the network operator associated with the current serving network and only emergency calls can be performed. Thus, a determination is made by mobile terminal 10 that a new serving network is needed. As a result, mobile terminal 10 attempts, in step s50, to connect to a new serving network using the stored BSB information.

Fig. 5 shows a flowchart of a method in one embodiment of the invention, which differs from the method illustrated in Fig. 2 in that step s40 of determining that the new serving network is needed is more specifically defined. Namely, when it is determined, in step s46, that the current serving network is not the preferred network or not one of the preferred networks, this leads to a determination that a new serving network is needed. The connection attempt is therefore carried out, in step s50, by mobile terminal 10 using the stored BSB information.

The preferred network or the list of preferred networks may be stored in the SIM card of mobile terminal 10 or in a built-in memory of memory terminal 10. The list of preferred networks may additionally contain priority information regarding which one or which ones of the preferred networks should be used as a matter of priority. The priority information may be used in the step of determining s46 in order to decide whether a new serving network is needed.

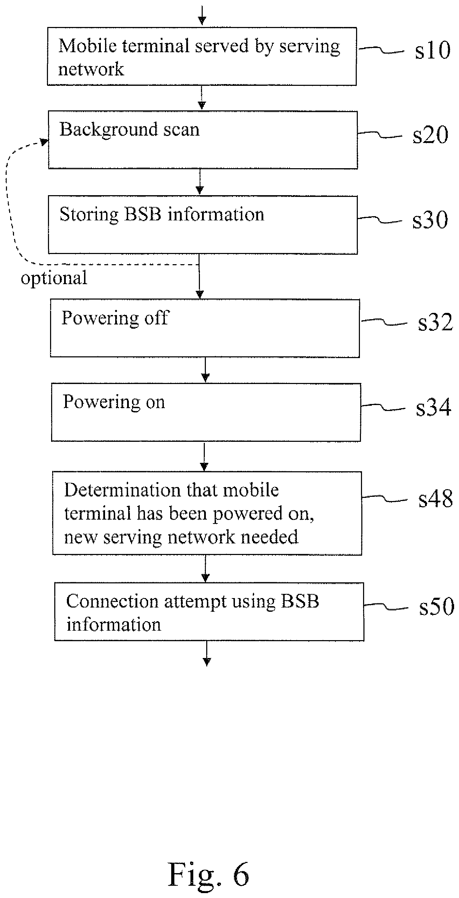

Fig. 6 is a flowchart of a method in one embodiment of the invention, which differs from the method illustrated in Fig. 2 in that step s40 of determining that a new serving network is needed is more specifically defined. Namely, it is determined s48 that a new serving network is needed when mobile terminal 10 has been powered on. The method of Fig. 6 also includes, between step s30 of storing the BSB information and step s48 of determining that mobile terminal 10 has been powered on, steps of powering off s32 and powering on s34 mobile terminal 10.

In one embodiment, not illustrated in Fig. 6, a step of attempting to connect to the last serving network by which mobile terminal 10 was served before being powered off is carried out between steps s48 and s50. Namely, step s50 of attempting, by mobile terminal 10, to connect to a new serving network using the BSB information is carried out only if the attempt to connect to the serving network by which mobile terminal 10 was last served before being powered off is determined to be unsuccessful.

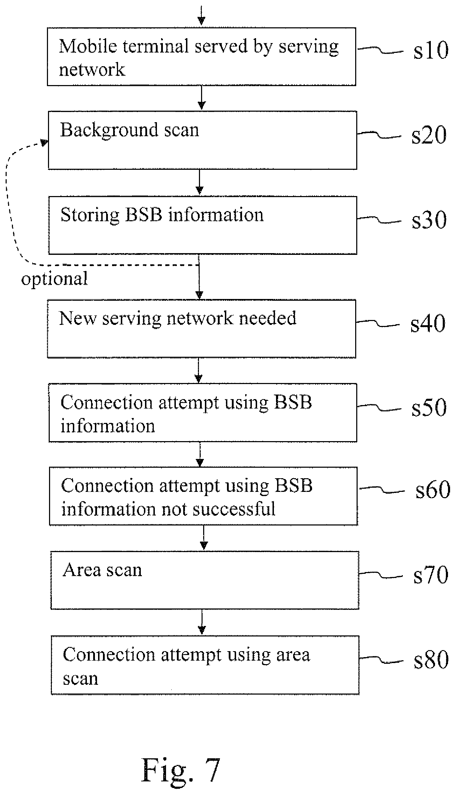

Fig. 7 is a flowchart of a method in one embodiment of the invention. In addition to the steps described with reference to Fig. 2, the method illustrated on Fig. 7 includes determining s60 that the attempt to connect, by mobile terminal 10, to a new serving network using the stored BSB information is unsuccessful. In that case, a full scan, also called "area scan" or "full area scan", is carried out, in step s70, and an attempt, in step s80, to connect to one of the radio access possibilities identified by the full area scan is carried out.

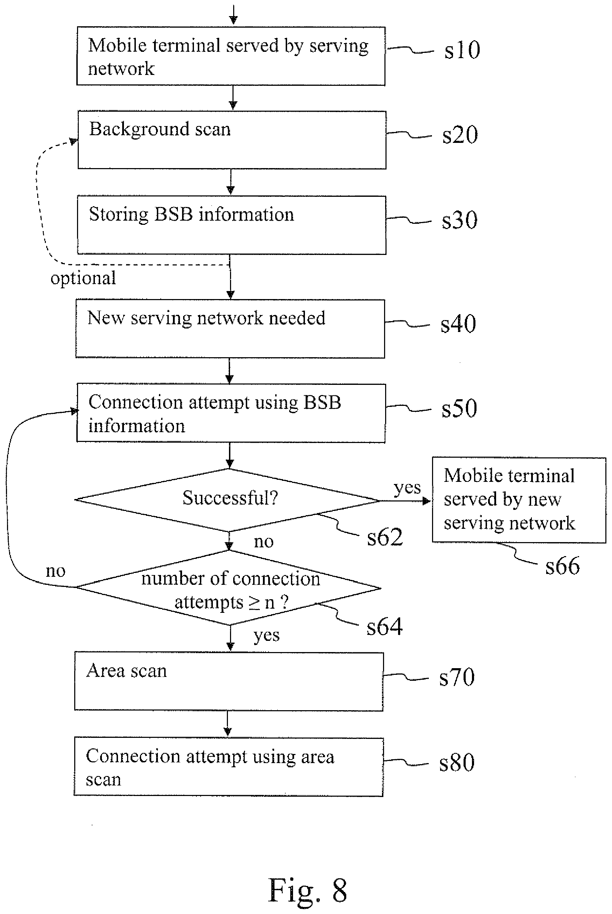

Fig. 8 is a flowchart of a method in one embodiment of the invention, which differs from the method illustrated in Fig. 7 in that step s50 of attempting to connect to a new serving network using BSB information is performed up to n times if not successful, where n is an integer larger than 1. In other words, step s50 of attempting to connect to a new serving network using the BSB information is first performed. It is then determined, in step s62, whether the attempt was successful. If successful, mobile terminal 10 is then served, in step s66, by the new serving network. Otherwise, i.e. if not successful, it is then determined, in step s64, whether the number of connection attempts using the BSB information has reached the threshold value n. The integer value n may be stored in mobile terminal 10 or in its SIM card. If the number of connection attempts using the BSB information is smaller than n, a further connection attempt using the BSB information is made s50. Otherwise, if the number of connection attempts using the BSB information is larger than or equal to n, a full area scan is carried out in step s70, followed by a corresponding connection attempt in step s80.

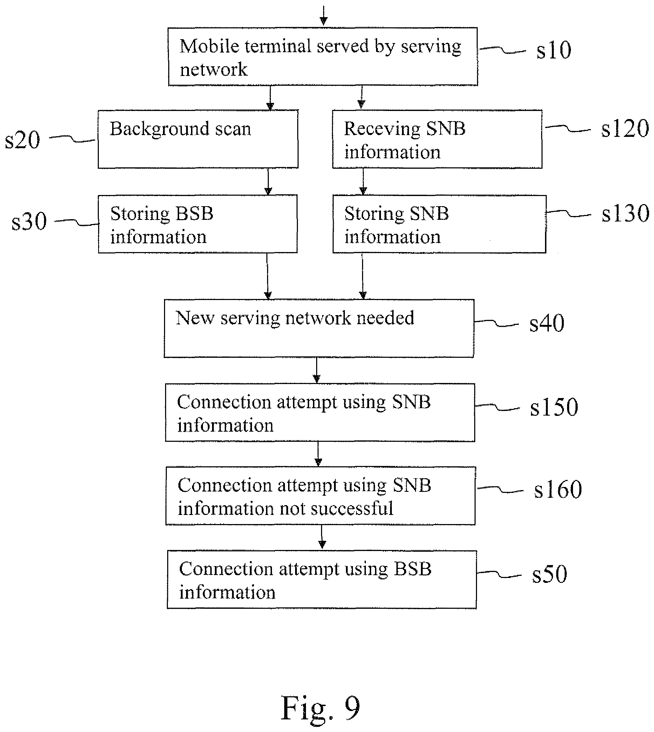

Fig. 9 illustrates a method in one embodiment of the invention wherein, in addition to the steps illustrated and explained with reference to Fig. 2, mobile terminal 10 receives, in step s120, from the serving network, SNB information. SNB information includes explicit information regarding available radio access possibilities in the area or around the area where mobile terminal 10 is located. The SNB information may also be received from another network node than the base station associated with the currently serving network. The received SNB information is stored, in step s130, in mobile terminal 10. Subsequently, when it is determined in step s40, by mobile terminal 10, that a new serving network is needed, a connection attempt is first made using the SNB information, in step s150. Then, only if the connection attempt using the SNB information is determined to be unsuccessful s160, a connection attempt using the BSB information is made in step s50 by mobile terminal 10.

The SNB information may be transmitted, in step s120, from the serving network or from another network node using a dedicated frequency channel or using signalling messages within an existing frequency channel used for transmitting payload information (voice, data,...).

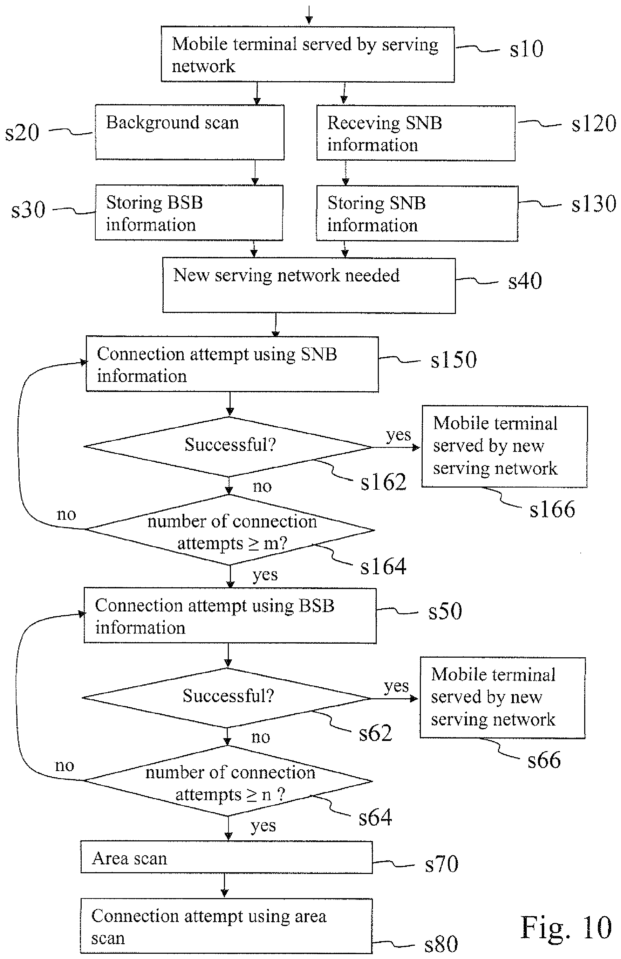

Fig. 10 is a flowchart of a method in one embodiment of the invention, which differs from the method illustrated in Fig. 9 in that several attempts to connect to a new serving network using SNB information are made, if necessary. The possibility to carry out a plurality of attempts is illustrated by steps s150, s162, s164 and s166 and will be easily understood by a skilled person. Namely up to m connection attempts are made using SNB information in step s164, wherein m is an integer equal or larger than 2. The remaining steps of the method are equivalent to steps s50, s62, s64, s66, s70, s80 already described with reference to Fig. 8.

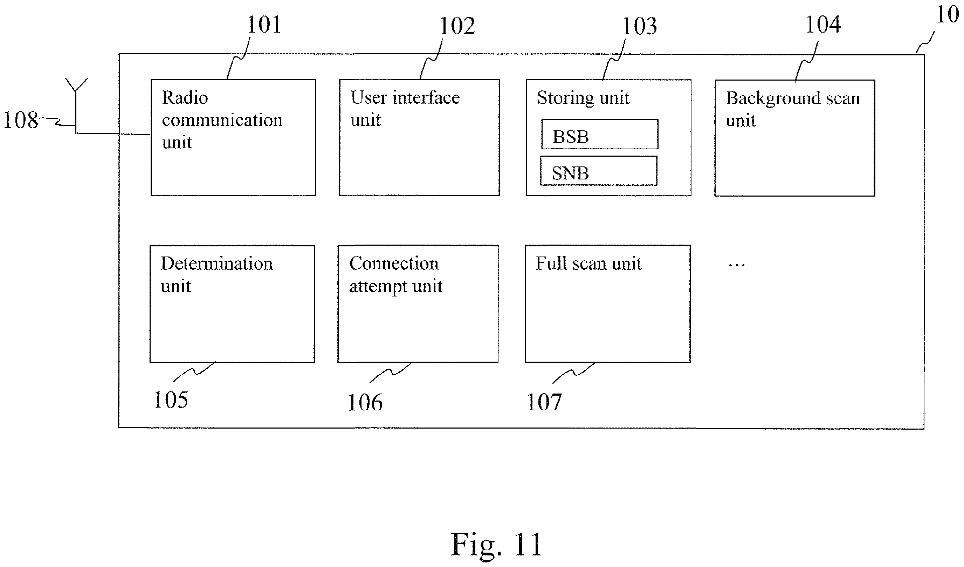

Fig. 11 schematically illustrates components of a mobile terminal 10 in one embodiment of the invention. Mobile terminal 10 includes a radio communication unit 101 connected to an antenna 108 for communicating with a base station. Antenna 108 may be configured to be able to communicate using a plurality of RATs, or instead more than one antenna 108 may be connected to a radio communication unit 101. A plurality of radio communication units 101 may also be provided for communication using the plurality of RATs.

A user interface unit 102 is also illustrated to provide output information (through e.g. a display, a touch screen, speakers, a keyboard, a keypad, ...) to a user of mobile terminal 10 or for receiving control commands, voice, and/or data from the user.

A storing unit 103 is also provided for storing the BSB information, the SNB information, the list of preferred networks (not illustrated), etc.

A background scan unit 104 is also provided for identifying available radio access possibilities in the area where mobile terminal 10 is located. Background scan unit 104 is configured to be able to perform the scanning while being served by a serving network.

A determination unit 105 is configured to be able to determine that a new serving network is needed. A connection attempt unit 106 is configured to be able to perform an attempt to connect to a new serving network using the BSB information, using the SNB information, or without using any information, i.e. by performing a full scan in cooperation with full scan unit 107.

The physical entities according to the invention and/or its embodiments, including the radio communication unit, user interface unit, storing unit, background scan unit, determination unit, connection attempt unit, and full scan unit, may comprise or store computer programs including instructions such that, when the computer programs are executed on the physical entities, steps, procedures and functions of these units are carried out according to embodiments of the invention. The invention also relates to such computer programs for carrying out the function of the units, and to any computer-readable medium storing the computer programs for carrying out methods according to the invention.

Where the terms "radio communication unit", "user interface unit", "storing unit", "background scan unit", "determination unit", "connection attempt unit", and "full scan unit" are used in the present document, no restriction is made regarding how distributed these elements may be and regarding how gathered these elements may be. That is, the constituent elements of the above radio communication unit, user interface unit, storing unit, background scan unit, determination unit, connection attempt unit, and full scan unit may be distributed in different software or hardware components or devices for bringing about the intended function. A plurality of distinct elements or units may also be gathered for providing the intended functionalities.

Any one of the above-referred units of a mobile terminal 10 may be implemented in hardware, software, field-programmable gate array (FPGA), application-specific integrated circuit (ASICs), firmware or the like.

In further embodiments of the invention, any one of the above-mentioned and/or claimed radio communication unit, user interface unit, storing unit, background scan unit, determination unit, connection attempt unit, and full scan unit is replaced by radio communication means, user interface means, storing means, background scan means, determination means, connection attempt means, and full scan means respectively, or by a radio transceiver, a user interface controller, a memory, a background scan controller, a determination controller, a connection attempt controller, and a full scan controller respectively, for performing the functions of the radio communication unit, user interface unit, storing unit, background scan unit, determination unit, connection attempt unit, and the full scan unit.

In further embodiments of the invention, any one of the above-described steps may be implemented using computer-readable instructions, for instance in the form of computer-understandable procedures, methods or the like, in any kind of computer languages, and/or in the form of embedded software on firmware, integrated circuits or the like.

Although the present invention has been described on the basis of detailed examples, the detailed examples only serve to provide the skilled person with a better understanding, and are not intended to limit the scope of the invention. The scope of the invention is much rather defined by the appended claims.

## Claims

1. Method carried out by a mobile terminal (10), the method including steps of
being served (s10) by a serving network; performing (s20) a background scan to identify radio access possibilities other than the serving network in the area where the mobile terminal (10) is located;
storing (s30) information, herein referred to as background-scan-based or BSB information, about the identified radio access possibilities;
determining (s40) that a new serving network is needed; and
attempting (s50) to connect to a new serving network using the BSB information,
**characterized in that**
the radio access possibilities stored in the BSB information include at least one radio access technology other than the radio access technology of the serving network and, for each radio access technology, at least one frequency band associated therewith.

2. Method of claim 1, wherein the step of determining (s40) includes a sub-step of
determining (s42) that coverage of the serving network by which the mobile terminal (10) was served is lost.

3. Method according to any one of the preceding claims, wherein the step of determining (s40) includes a sub-step of
determining (s44) that the serving network by which the mobile terminal (10) is served provides limited services.

4. Method according to any one of the preceding claims, wherein the step of determining (s40) includes any one of the sub-steps of
determining (s46) that the serving network by which the mobile terminal (10) is served is not the mobile terminal's (10) preferred serving network;
determining (s46) that the serving network by which the mobile terminal (10) is served is not one of the preferred serving networks amongst a list of preferred serving networks stored in the mobile terminal (10);
determining (s46) that a timer has expired and that the serving network by which the mobile terminal (10) is served is not the mobile terminal's (10) preferred serving network; and
determining (s46) that a timer has expired and that the serving network by which the mobile terminal (10) is served is not one of the preferred serving networks amongst a list of preferred serving networks stored in the mobile terminal (10).

5. Method according to any one of the preceding claims, further including, after the step of storing (s30) and before the step of determining (s40), steps of
being powered off (s32); and
being powered on (s34);
wherein the step of determining (s40) includes a sub-step of
determining (s48) that the mobile terminal (10) has been powered on.

6. Method according to any one of the preceding claims, further including, after the step of attempting (s50), steps of
determining (s60, s62, s64) that the step of attempting is not successful;
performing (s70) a scan to identify radio access possibilities in an area where the mobile terminal (10) is located; and
attempting (s80) to connect to a new serving network using a radio access possibility identified by the scan.

7. Method according to any one of claims 1 to 5, further including steps of
receiving (s120), from the serving network, information, herein referred to as serving-network-based or SNB information, about radio access possibilities in an area where the mobile terminal (10) is located; and
storing (s130) the SNB information.

8. Method of claim 7, further including, after the step of determining (s40) that a new serving network is needed and before the step of attempting (s50) to connect to a new serving network using the BSB information, steps of
attempting (s150) to connect to a new serving network using the SNB information; and
determining (s160, s162, s164) that the step of attempting to connect to a new serving network using the SNB information is not successful.

9. Method of claim 8, further including, after the step of attempting (s50) to connect to a new serving network using the BSB information,
determining (s60, s62, s64) that the step of attempting to connect to a new serving network using the BSB information is not successful;
performing (s70) a scan to identify the radio access possibilities in the area where the mobile terminal is located; and
attempting (s80) to connect to a new serving network using a radio access possibility identified by the scan.

10. Mobile terminal (10) configured to carry out the method according to any one of the preceding claims.

11. Computer program product comprising instructions configured, when executed on a mobile terminal (10), to cause the mobile terminal (10) to carry out the method according to any one of claims 1 to 9.

## Patentansprüche

1. Verfahren, das durch ein mobiles Endgerät (10) ausgeführt wird, wobei das Verfahren die folgenden Schritte beinhaltet:
Bedientwerden (s10) durch ein bedienendes Netzwerk;
Durchführen (s20) einer Hintergrundsuche, um andere Funkzugangsmöglichkeiten als das bedienende Netzwerk in dem Bereich zu identifizieren, in dem sich das mobile Endgerät (10) befindet;
Speichern (s30) von Informationen, die hierin als auf Hintergrundsuche basierende oder BSB-Informationen (BSB - background-scan-based) bezeichnet werden, über identifizierte Funkzugangsmöglichkeiten;
Bestimmen (s40), dass ein neues bedienendes Netzwerk benötigt wird; und
Versuchen (s50), sich mit einem neuen bedienenden Netzwerk unter Verwendung der BSB-Informationen zu verbinden,
**dadurch gekennzeichnet, dass**
die in den BSB-Informationen gespeicherten Funkzugangsmöglichkeiten mindestens eine andere Funkzugangstechnologie als die Funkzugangstechnologie des bedienenden Netzwerks und für jede Funkzugangstechnologie mindestens ein damit assoziiertes Frequenzband beinhalten.

2. Verfahren nach Anspruch 1, wobei der Schritt des Bestimmens (s40) einen folgenden Unterschritt beinhaltet:
Bestimmen (s42), dass eine Abdeckung des bedienenden Netzwerks, durch welches das mobile Endgerät (10) bedient wurde, verlorengegangen ist.

3. Verfahren nach einem der vorstehenden Ansprüche, wobei der Schritt des Bestimmens (s40) einen folgenden Unterschritt beinhaltet:
Bestimmen (s44), dass das bedienende Netzwerk, durch welches das mobile Endgerät (10) bedient wird, eingeschränkte Dienste bereitstellt.

4. Verfahren nach einem der vorstehenden Ansprüche, wobei der Schritt des Bestimmens (s40) einen beliebigen der folgenden Unterschritte beinhaltet:
Bestimmen (s46), dass das bedienende Netzwerk, durch welches das mobile Endgerät (10) bedient wird, nicht das von dem mobilen Endgerät (10) bevorzugte bedienende Netzwerk ist;
Bestimmen (s46), dass das bedienende Netzwerk, durch welches das mobile Endgerät (10) bedient wird, kein bevorzugtes bedienendes Netzwerk aus einer Liste von bevorzugten bedienenden Netzwerken ist, die in dem mobilen Endgerät (10) gespeichert ist;
Bestimmen (s46), dass ein Timer abgelaufen ist und dass das bedienende Netzwerk, durch welches das mobile Endgerät (10) bedient wird, nicht das von dem mobilen Endgerät (10) bevorzugte bedienende Netzwerk ist;
Bestimmen (s46), dass ein Timer abgelaufen ist und dass das bedienende Netzwerk, durch welches das mobile Endgerät (10) bedient wird, kein bevorzugtes bedienendes Netzwerk aus einer Liste von bevorzugten bedienenden Netzwerken ist, die in dem mobilen Endgerät (10) gespeichert ist.

5. Verfahren nach einem der vorstehenden Ansprüche, ferner, nach dem Schritt des Speicherns (s30) und vor dem Schritt des Bestimmens (s40), die folgenden Schritte beinhaltend:
Ausgeschaltetwerden (s32); und
Eingeschaltetwerden (s34);
wobei der Schritt des Bestimmens (s40) einen folgenden Unterschritt beinhaltet:
Bestimmen (s48), dass das mobile Endgerät (10) eingeschaltet wurde.

6. Verfahren nach einem der vorstehenden Ansprüche, ferner, nach dem Schritt des Versuchens (s50), die folgenden Schritte beinhaltend:
Bestimmen (s60, s62, s64), dass der Schritt des Versuchens nicht erfolgreich ist;
Durchführen (s70) einer Suche, um Funkzugangsmöglichkeiten in einem Bereich zu identifizieren, in dem sich das mobile Endgerät (10) befindet; und
Versuchen (s80), sich mit einem neuen bedienenden Netzwerk unter Verwendung einer Funkzugangsmöglichkeit zu verbinden, die durch die Suche identifiziert wurde.

7. Verfahren nach einem der Ansprüche 1 bis 5, ferner die folgenden Schritte beinhaltend:
Empfangen (s120), von dem bedienenden Netzwerk, von Informationen, die hierin als auf das bedienende Netzwerk basierend oder SNB-Informationen (SNB - serving-network-based) bezeichnet sind, über Funkzugangsmöglichkeiten in einem Bereich, in dem sich das mobile Endgerät (10) befindet; und
Speichern (s130) der SNB-Informationen.

8. Verfahren nach Anspruch 7, ferner, nach dem Schritt des Bestimmens (s40), dass ein neues bedienendes Netzwerk benötigt wird, und vor dem Schritt des Versuchens (s50), sich unter Verwendung der BSB-Informationen mit einem neuen bedienenden Netzwerk zu verbinden, die folgenden Schritte beinhaltend:
Versuchen (sl50), sich mit einem neuen bedienenden Netzwerk unter Verwendung der SNB-Informationen zu verbinden; und
Bestimmen (s160, s162, s164), dass der Schritt des Versuchens, sich mit einem neuen bedienenden Netzwerk unter Verwendung der SNB-Informationen zu verbinden, nicht erfolgreich ist.

9. Verfahren nach Anspruch 8, ferner, nach dem Schritt des Versuchens (s50), sich mit einem neuen bedienenden Netzwerk unter Verwendung der BSB-Informationen zu verbinden, Folgendes beinhaltend:
Bestimmen (s60, s62, s64), dass der Schritt des Versuchens, sich mit einem neuen bedienenden Netzwerk unter Verwendung der BSB-Informationen zu verbinden, nicht erfolgreich ist;
Durchführen (s70) einer Suche, um Funkzugangsmöglichkeiten in dem Bereich, in dem sich das mobile Endgerät befindet, zu identifizieren; und
Versuchen (s80), sich mit einem neuen bedienenden Netzwerk unter Verwendung einer Funkzugangsmöglichkeit zu verbinden, die durch die Suche identifiziert wurde.

10. Mobiles Endgerät (10), das dazu konfiguriert ist, das Verfahren nach einem der vorstehenden Ansprüche auszuführen.

11. Computerprogrammprodukt, das Anweisungen umfasst, die, wenn sie auf einem mobilen Endgerät (10) ausgeführt werden, das mobile Endgerät (10) dazu veranlassen, das Verfahren nach einem der Ansprüche 1 bis 9 auszuführen.

## Revendications

1. Procédé mis en oeuvre par un terminal mobile (10), le procédé incluant des étapes consistant à :
être desservi (s10) par un réseau de desserte ;
effectuer (s20) un balayage en arrière-plan pour identifier des possibilités d'accès radio autres que le réseau de desserte dans la zone où le terminal mobile (10) est localisé ;
stocker (s30) des informations, appelées ici informations basées sur le balayage en arrière-plan ou BSB, sur les possibilités d'accès radio identifiées ;
déterminer (s40) qu'un nouveau réseau de desserte est nécessaire ; et
tenter (s50) de se connecter à un nouveau réseau de desserte en utilisant les informations BSB,
**caractérisé en ce que** :
les possibilités d'accès radio stockées dans les informations BSB incluent au moins une technologie d'accès radio autre que la technologie d'accès radio du réseau de desserte et, pour chaque technologie d'accès radio, au moins une bande de fréquences qui lui est associée

2. Procédé selon la revendication 1, dans lequel l'étape de détermination (s40) inclut une sous-étape consistant à :
déterminer (s42) que la couverture du réseau de desserte par lequel le terminal mobile (10) était desservi est perdue.

3. Procédé selon l'une quelconque des revendications précédentes, dans lequel l'étape de détermination (s40) inclut une sous-étape consistant à :
déterminer (s44) que le réseau de desserte par lequel le terminal mobile (10) est desservi fournit des services limités.

4. Procédé selon l'une quelconque des revendications précédentes, dans lequel l'étape de détermination (s40) inclut l'une quelconque des sous-étapes consistant à :
déterminer (s46) que le réseau de desserte par lequel le terminal mobile (10) est desservi n'est pas le réseau de desserte préféré du terminal mobile (10) ;
déterminer (s46) que le réseau de desserte par lequel le terminal mobile (10) est desservi n'est pas l'un des réseaux de desserte préférés parmi une liste de réseaux de desserte préférés stockée dans le terminal mobile (10) ;
déterminer (s46) qu'un temporisateur a expiré et que le réseau de desserte par lequel le terminal mobile (10) est desservi n'est pas le réseau de desserte préféré du terminal mobile (10) ; et
déterminer (s46) qu'un temporisateur a expiré et que le réseau de desserte par lequel le terminal mobile (10) est desservi n'est pas l'un des réseaux de desserte préférés parmi une liste de réseaux de desserte préférés stockée dans le terminal mobile (10).

5. Procédé selon l'une quelconque des revendications précédentes, incluant en outre, après l'étape de stockage (s30) et avant l'étape de détermination (s40), des étapes consistant à :
être mis hors tension (s32) ; et
être mis sous tension (s34) ;
dans lequel l'étape de détermination (s40) inclut une sous-étape consistant à :
déterminer (s48) que le terminal mobile (10) a été mis sous tension.

6. Procédé selon l'une quelconque des revendications précédentes, incluant en outre, après l'étape de tentative (s50), des étapes consistant à :
déterminer (s60, s62, s64) que l'étape de tentative n'a pas réussi ;
effectuer (s70) un balayage pour identifier des possibilités d'accès radio dans une zone où le terminal mobile (10) est localisé ; et
tenter (s80) de se connecter à un nouveau réseau de desserte en utilisant une possibilité d'accès radio identifiée par le balayage.

7. Procédé selon l'une quelconque des revendications 1 à 5, incluant en outre des étapes consistant à :
recevoir (s120), en provenance du réseau de desserte, des informations, appelées ici informations basées sur le réseau de desserte ou SNB, sur des possibilités d'accès radio dans une zone où le terminal mobile (10) est localisé ; et
stocker (sl30) les informations SNB.

8. Procédé selon la revendication 7, incluant en outre, après l'étape consistant à déterminer (s40) qu'un nouveau réseau de desserte est nécessaire et avant l'étape consistant à tenter (s50) de se connecter à un nouveau réseau de desserte en utilisant les informations BSB, des étapes consistant à :
tenter (sl50) de se connecter à un nouveau réseau de desserte en utilisant les informations SNB ; et
déterminer (sl60, sl62, sl64) que l'étape consistant à tenter de se connecter à un nouveau réseau de desserte en utilisant les informations SNB n'a pas réussi.

9. Procédé selon la revendication 8, incluant en outre, après l'étape consistant à tenter (s50) de se connecter à un nouveau réseau de desserte en utilisant les informations BSB, les étapes consistant à :
déterminer (s60, s62, s64) que l'étape consistant à tenter de se connecter à un nouveau réseau de desserte en utilisant les informations BSB n'a pas réussi ;
effectuer (s70) un balayage pour identifier les possibilités d'accès radio dans la zone où le terminal mobile est localisé ; et
tenter (s80) de se connecter à un nouveau réseau de desserte en utilisant une possibilité d'accès radio identifiée par le balayage.

10. Terminal mobile (10) configuré pour mettre en oeuvre le procédé selon l'une quelconque des revendications précédentes.

11. Produit de programme informatique comprenant des instructions configurées, lorsqu'elles sont exécutées sur un terminal mobile (10), pour amener le terminal mobile (10) à mettre en oeuvre le procédé selon l'une quelconque des revendications 1 à 9.
